# EUROPEAN PATENT SPECIFICATION

(11) **EP 1 286 880 B1**
(45) Date of publication and mention of the grant of the patent: **02.08.2006**
(21) Application number: 01937052.7
(22) Date of filing: 14.05.2001
(51) Int. Cl.: B62D 65/00, B23K 37/047

(54) **A METHOD AND A PLANT FOR ASSEMBLY**
HERSTELLUNGSVERFAHREN UND HERSTELLUNGSANLAGE
PROCEDE ET USINE D'ASSEMBLAGE

(30) Priority: 05.06.2000 SE 0002097
(43) Date of publication of application: 05.03.2003
(73) Proprietor: ABB AB, 721 83 Västeras (SE)
(72) Inventor: ERIKSSON, Göran, S-293 92 Jämshög (SE); ÖSTERGAARD, Ted, S-293 35 Olofström (SE)
(74) Representative: Dahlstrand, Björn
(86) International application number: PCT/SE2001/001043
(87) International publication number: WO 2001/094191

(56) References cited:
- WO-A1-98/42477
- DE-A1- 19 820 094
- GB-A- 1 222 142
- US-A- 4 256 947
- US-A- 4 960 969
- US-A- 5 239 739

## Description

### TECHNICAL FIELD

The present invention relates to a method for assembling, in an assembly plant with at least one industrial robot, a vehicle body or at least a part thereof, the body components being, for the formation of the vehicle body or its part, brought to predetermined positions in relation to one another, they there being joined together.

The present invention also relates to an assembly plant for assembling a vehicle body or at least a part thereof on the basis of a number of body components, and comprising a number of manipulators and a control system containing at least one program module with a plurality of processors rehearsed to execute the movements of the manipulators on the basis of a computer program, the manipulators including means for displacing body components, for positioning and fixing and for joining them together.

### BACKGROUND ART

In the assembly of vehicle bodies according to prior art technology, use is made of a large number of fixtures in which the body components are placed, often by means of industrial robots, whereafter the body components positioned in the fixtures are joined together by means of welding, the welding equipment being carried and manipulated by industrial robots. It is usual that such assembly take place on the basis of a relatively large number of often relatively small body components, for which reason a large number of fixtures is required. These fixtures are of necessity model-customised in such a manner that one set of fixtures is required for assembling a specific body type. As a result, a change of body type requires re-tooling of fixtures, which is a time-consuming and costly operation.

WO-A1-9842477 teaches a device for welding car bodies comprising hanging positioning robots working together with welding robots on the ground. This improves the use of the common space in a robotcell. In the robot cell, there are a large number of model-customised fixtures with body parts attached. The only thing that limits the amount of different car body models is the amount of storage places for body part fixtures and tools in the cell.

### OUTLINE OF THE INVENTION

The present invention has for its object to formulate the method intimated by way of introduction such that precision in the assembly is improved, that the downtimes between change of body type are substantially shortened and costly specifically manufactured fixtures are dispensed with.

The object forming the basis of the present invention will be attained if the method is given the characterising features as set forth in appended Claim 1.

By the employment of retainer devices which "on the one side" have coupling members for positionally fixing and interconnecting with the positioning and fixing device and which "on the other side" have gripping members for engagement with the body components, the major advantage will be afforded that a large number of model-customised fixtures are avoided.

In that one and the same industrial robot is employed for both handling the retainer devices and for handling the joining device, the cycle time is reduced, at the same time as the requirement on the number of machine parts is reduced, since the retainer device may be provided with a body component during the time which is employed for the joining operation.

A further object of the present invention is to increase the speed in the assembly process.

This object is attained if the method is given the characterising features as set forth in appended Claim 3.

As a result of these features, the major advantage will be afforded that several retainer devices may be operated simultaneously by their respective industrial robots and that these, when the retainer devices are provided with new body components, may be employed for the joining operation.

A further shortening of the cycle time for the assembly operation will be achieved if the method is also given the characterising features as set forth in appended Claim 7.

As a result of these features, the major advantage is afforded that the joining operation may be divided into two different steps, where the first step merely entails a "geometric assurance" of the vehicle body in the positioning and fixing device, i.e. that the joining operation there proceeds only so far that the body components, after release, would not run the risk of relative positional changes, while the final phase of the joining operation may take place outside the positioning and fixing device.

### BRIEF DESCRIPTION OF THE ACCOMPANYING DRAWINGS

The present invention will now be described in greater detail hereinbelow, with reference to the accompanying Drawings. In the accompanying Drawings:
- Fig. 1: schematically shows a layout of an assembly plant according to the present invention; and
- Fig. 2: is a perspective view of a positioning and fixing device included in the assembly plant.

### DESCRIPTION OF PREFERRED EMBODIMENT

The present invention will be described below in connection with the assembly of a truck cab, but it will be obvious to a person skilled in the art that the present invention may also be applied in the assembly of any type of vehicle body or at least a part thereof.

In the illustrated layout, the assembly plant comprises three different assembly or work stations 1, 2 and 3, respectively, which are disposed in mutual sequence along a through-flow direction 4 for the truck cabs in the process of being assembled. Each work station includes a positioning and fixing device 5, 6 and 7, respectively. In the longitudinal direction of the through-flow direction 4, a conveyor path 8 further extends throughout the entire assembly plant, along which a number of drivable carriages or pallets, so-called skids, may be driven in the through-flow direction 4. The carriages are raisable and lowerable and are intended for carrying, in the first stage, a base plate or a complete floor for the truck cab, but gradually also for supporting the truck cab which is in the process of being assembled.

From the left-hand end of the conveyor path 8 in the Figure, there is a return path for returning the carriages 9 to a stating position 10.

As intimated above, the conveyor path 8 extends through the different work stations 1, 2 and 3, but also through the positioning and fixing devices 5, 6 and 7 designed as gantries so that, in the first stage, a complete cab floor 11 and thereafter a truck cab in the process of being assembled may be transported through the plant along the through-flow direction 4.

In each work station 1, 2 and 3, respectively, there is at least one path 12 along which at least one industrial robot 13 is drivable parallel with the through-flow direction 4. Each respective robot path 12 extends past each respective positioning and fixing device and so close to it that the industrial robot moving on the robot path reaches into the positioning and fixing device in order to be able to carry out various operations therein.

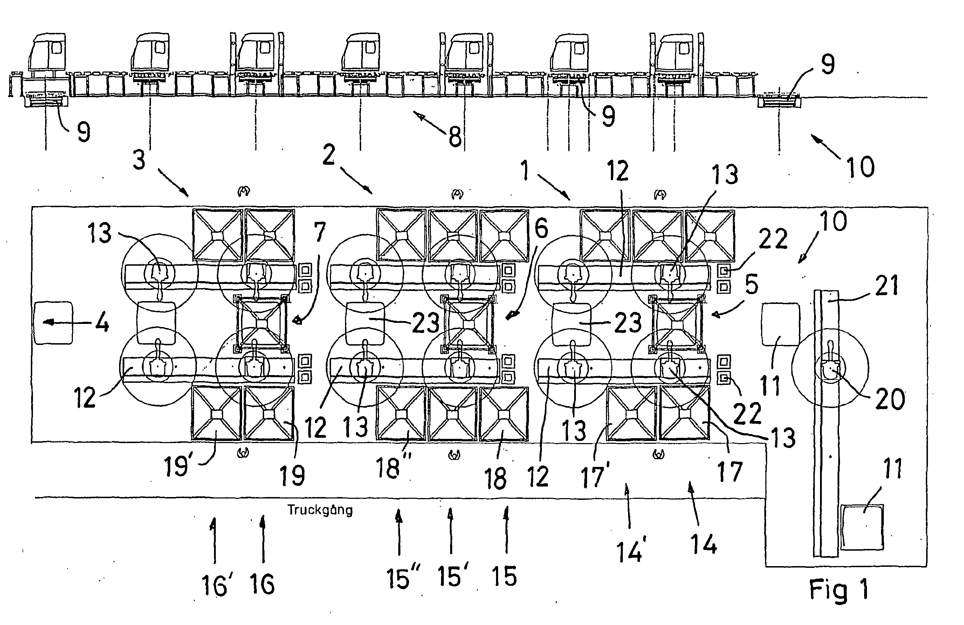

As is apparent from Fig. 1, one robot path 12 is employed on each side of the positioning and fixing devices, at least in some of the different work stations 1, 2 and 3. As a result, two industrial robots 13 can carry out different operations simultaneously and from opposing sides on a truck cab which is in the process of being assembled.

On that side of the robot paths facing away from the positioning and fixing device 5, 6 and 7, respectively, there is a number of starting positions 14, 15, 16 respectively for a corresponding number of retainer devices 17, 18, 19, respectively, as will be described in greater detail below, both as to function and construction.

It will be obvious that, in such cases where twin robot paths 12 are employed in each work station, it is also possible to employ twin sets of starting positions for the retainer devices.

The different retainer devices 17, 18, 19 are located in their starting positions 14, 15, 16, respectively, in positions that are entered in the control system employed for controlling the assembly plant. This implies that the robots 13 "know" exactly where the different retainer devices are located when they are in their starting positions.

The retainer devices are provided with directional and gripping members by means of which a body component may accurately be positioned and fixed in relation to a retainer device. In such instance, it should be observed that only the placing of the directional and gripping members is directly adapted to the body component which is to be positioned and grasped in each retainer device. Otherwise, the retainer devices are standardised and are identical.

The retainer devices each have a coupling member for interconnection with the turntable on an industrial robot 13. The coupling member comprises, on the one hand, purely mechanical couplings, but also couplings for the supply of manipulation medium to the retainer device, for example electric cables, compressed air lines and the like.

An external supply of manipulating medium is also catered for in the different starting positions 14, 15 and 16 for the retainer devices so that, already in the starting positions, the various body components may be directed and grasped in positionally fixing fashion in each respective retainer device.

The different carriages 9 movable along the conveyor path 8 display directional devices, for example in the form of guide stub shafts which engage with corresponding guide holes in the base plates or cab floor 11. This implies that a complete cab floor of an industrial robot 20 which is drivable along a transverse robot path 21 can be employed for placing the cab floor on a carriage 9 where this is located in its starting position 10. As a result, the placing of the cab floor in relation to the carriage 9 is established.

The cab floor 11 resting on the carriage 9 is displaced along the conveyor path 8 in to the first work station 1 along the through-flow direction 4, where the carriage 9 is positioned accurately in relation to the positioning and fixing device 5 located there. Thereafter, the cab floor 11 is raised to the correct vertical position in the positioning and fixing device.

At least one, but preferably more of the industrial robots 13 included in the first work station 1 may be caused to grasp and hold a retainer device with a body component positioned and fixed therein in order thereafter to move the retainer device and the component to a position for securing the retainer device in the positioning and fixing device 5. To this end, the positioning and fixing device and the retainer device have mutually engaging connecting members by means of which the retainer device can, in an accurate manner, be positioned and fixed in the positioning and fixing device. This naturally entails also that the body component is accurately positioned and fixed as well in the positioning and fixing device.

Preferably, at least two retainer devices are fixed simultaneously in the positioning and fixing device, one from each side of the conveyor path 8.

In order that the body components do not run the risk of being positionally displaced in relation to the retainer devices or possibly completely falling out of them, there are disposed couplings in the positioning and fixing device for manipulating media to the retainer devices so that these are continuously supplied with such media.

After completion of the above-mentioned steps, the robots 13 are disengaged from their respective retainer devices, whereafter the robots are moved to tool stores 22 where they are connected with joining devices which, carried and manipulated by the industrial robots, are then employed for joining together the body components placed in the positioning and fixing device.

Once the joining together of the cab floor 11 and the body components disposed thereon has proceeded so far that, after release, they would no longer run the risk of undergoing mutual positioning changes, the assembly consisting of the cab floor and the body components secured thereon can, by means of the carriage 9 and the conveyor path 8, be displaced out of the positioning and fixing device to a joining position 23 where the final joining together takes place, with the aid of a further one or more industrial robots 13 and joining devices carried and manipulated by them.

At the same time, the industrial robots which placed the retainer devices in the positioning and fixing devices have deposited their joining devices in the tool store 22 and thereafter once again been connected to the retainer devices and returned them to their respective starting positions 14, 15, 16, respectively, where new bodies components are put in place.

After the final joining in the first work station 1, the partly assembled truck cab is conveyed along the through-flow direction 4 to the second work station 2 where new retainer devices 15, 15' and 15" with body components positionally fixed and secured therein are lifted into the positioning and fixing device 6 disposed there, whereupon the procedure from the first work station 1 is repeated.

If a third work station 3 is employed with a third positioning and fixing device 7, after final joining in the second work station 2, the partly assembled truck cab is conveyed to the third work station where the procedure is repeated.

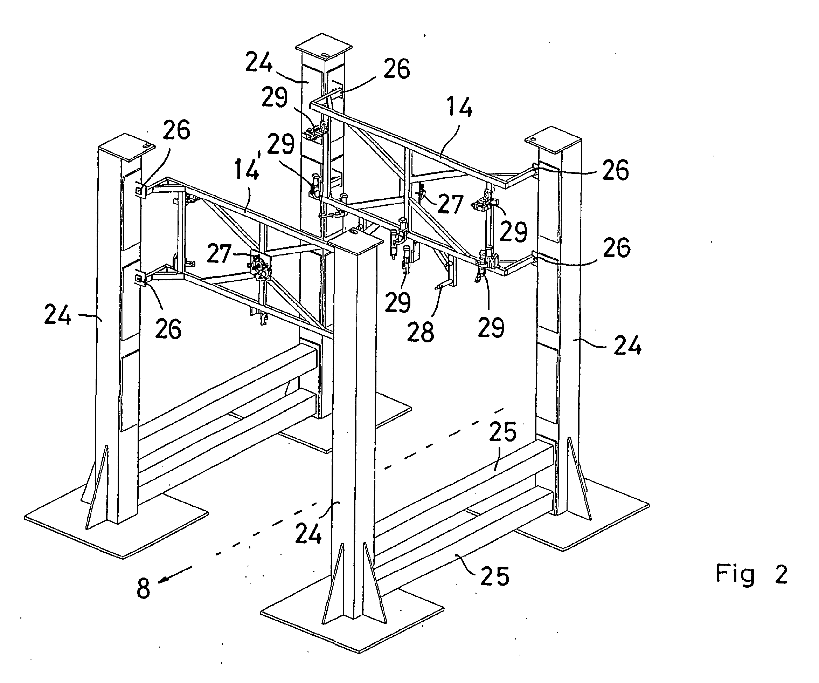

Fig. 2 shows in perspective an example of a positioning and fixing device. It will be apparent from the Figure that it comprises vertical columns 24 which are arranged pairwise on either side of the conveyor path 8. For stabilising the columns pairwise, these are connected, at their lower regions, to connecting rods 25. The columns form a gantry through which the conveyor path 8 extends.

The vertical columns 24 display coupling members 26 for cooperation with corresponding coupling members on those retainer devices, for example 14 and 14', which are to be secured in the columns 24. These coupling members 26 and the corresponding coupling members in the retainer devices 14 and 14' are manoeuvrable under the action of suitable manipulators or servo devices which are controlled by the master control system of the plant according to the present invention.

As was mentioned above, the different retainer devices have coupling members 27 for interconnection with the industrial robots 13 which are employed for manoeuvring the retainer devices. As was further mentioned above, these coupling members 27 have, on the one hand, mechanical couplings and, on the other hand, couplings for manipulation media.

The retainer devices 14, 14' further have directional devices 28 and gripping members 29 by means of which body components can, in an accurately positioned manner, be grasped and held in the retainer devices. These directional devices and gripping members are arranged in order to fit together with a single body component. At least the gripping members 29 can be manipulated under the action of manipulators which are connected to an operating or manipulation media supply either via the industrial robot 13, via the operating and manipulating medium supply of the positioning and fixing device or via an external operating or manipulation medium supply in each respective starting position 14, 14'. These manipulators are also controlled by the control system of the assembly plant according to the present invention.

## Claims

1. In an assembly plant with at least one industrial robot, a method of assembling a vehicle body or at least a part thereof, vehicle body components being, for the formation of the vehicle body or its part, brought to predetermined positions in relation to one another, they there being joined together, **characterised in that** a first body component is placed, positioned and fixed in a first retainer device (17, 18, 19); that the retainer device with the first body component is moved by a first industrial robot (13) to a stationary positioning and fixing device (5, 6, 7, respectively) and positioned and fixed in relation thereto; that a further body component (11) is moved to the positioning and fixing device and positioned and fixed in relation thereto; and that the first and further body components are joined together, at least to the extent that, after release, they would not run the risk of mutual positional displacements, by means of a joining device which is carried and manipulated by the first or possibly by a further industrial robot (13), such that one and the same industrial robot (13) is employed for both handling the retainer device (17, 18, 19) and for handling the joining device.

2. A method according to claim 1, wherein the first industrial robot (13) is released from the first retainer device (17) when this has been positionally fixed in relation to the positioning and fixing device (5) in order thereafter to carry and manipulate the joining device.

3. A method according to claim 1 or 2, wherein the first industrial robot (13) is reconnected to the first retainer device (17) after the joining together of the body components for returning the retainer device to a starting position (14) where a body component is once again positioned and fixed in relation to the retainer device.

4. A method according to any of claims 1-3, wherein after the joining together of the body components, these are displaced from the positioning and fixing device (5) for supplementary joining.

5. A method according to any proceeding claim, wherein after the joining together of the body components and possible supplementary joining, these are displaced to a second positioning and fixing device (6, 7, respectively) and positioned and fixed in relation thereto; that one or more additional retainer devices (18, 19, respectively) with additional body components positioned and fixed therein are positioned and fixed in relation to the positioning and fixing device; and that these additional body components are joined together with the previously joined body components.

6. A method according to any of the proceeding claims, wherein the positioning and fixing device is brought to comprise means for manipulating media to the retainer devices so that these are continuously supplied with such media.

7. A method according to any of the proceeding claims, wherein the further body component (11) is positionally fixed in the positioning and fixing device (5) before the first retainer device (17).

8. A computer program containing instructions for a program module with a plurality of processors for actuating a number of manipulators to execute a method as claimed in any of claims 1 to 7.

9. A computer program according to claim 16, provided at least partly by the intermediary of a network such as Internet.

10. A computer readable medium containing a computer program with instructions for actuating a number of processors to execute a method as claimed in any of claims 1 to 7.

## Patentansprüche

1. Verfahren zum Montieren eines Fahrzeugaufbaus oder mindestens eines Teils davon in einem Montagewerk mit mindestens einem Industrieroboter, wobei die Fahrzeugaufbau-Komponenten, zur Bildung des Fahrzeugaufbaus oder seiner Teile, in vorbestimmte Positionen in Beziehung zueinander gebracht werden, wobei sie zusammengefügt werden, **dadurch gekennzeichnet, dass** eine erste Aufbaukomponente in einer ersten Aufnahmevorrichtung (17, 18, 19) platziert, positioniert und fixiert wird; dass die Aufnahmevorrichtung mit der ersten Aufbaukomponente von einem ersten Industrieroboter (13) in eine stationäre Positionierungs- und Fixiervorrichtung (5 bzw. 6 bzw. 7) bewegt und positioniert und fixiert in Beziehung dazu wird; dass eine weitere Aufbaukomponente (11) zu der Positionierungs- und Fixiervorrichtung bewegt und positioniert und fixiert in Beziehung dazu wird; und dass die erste und weitere Aufbaukomponenten zusammengefügt werden, mindestens zu dem Maß, dass sie nach der Freigabe nicht Gefahr einer gegenseitigen Positionsversetzung laufen, mittels einer Zusammenfügevorrichtung, die von dem ersten oder möglicherweise von einem weiteren Industrieroboter (13) getragen und betätigt wird, so dass ein und derselbe Industrieroboter (13) sowohl zum Handhabung der Aufnahmevorrichtung (17, 18, 19) als auch zur Handhabung der Zusammenfügevorrichtung eingesetzt werden kann.

2. Verfahren nach Anspruch 1, wobei der erste Industrieroboter (13) von der ersten Aufnahmevorrichtung (17) freigegeben wird, wenn diese in Beziehung auf die Positionierungs- und Fixiervorrichtung (5) positionsgemäß fixiert worden ist, um dann die Zusammenfügevorrichtung zu tragen und zu betätigen.

3. Verfahren nach Anspruch 1 oder 2, wobei der erste Industrieroboter (13) nach dem Zusammenfügen der Aufbaukomponenten wieder mit der ersten Aufnahmevorrichtung (17) verbunden wird, um die Aufnahmevorrichtung in eine Startposition (14) zurückzuführen, in der eine Aufbaukomponente wieder in Beziehung auf die Aufnahmevorrichtung positioniert und fixiert wird.

4. Verfahren nach einem der Ansprüche 1 bis 3, wobei die Aufbaukomponenten, nach ihrem Zusammenfügen, von der Positionierungs- und Fixiervorrichtung (5) zum zusätzlichen Fügen versetzen werden.

5. Verfahren nach einem der vorangegangenen Ansprüche, wobei die Aufbaukomponenten, nach dem Zusammenfügen und möglichem zusätzlichem Fügen, in eine zweite Positionierungs- und Fixiervorrichtung (6 bzw. 7) versetzen und positioniert und fixiert in Beziehung dazu werden; wobei diese eine oder mehrere zusätzliche Aufnahmevorrichtung (18 bzw. 19) mit zusätzlichen, darin positionierten und fixierten Aufbaukomponente in Beziehung zu der Positionierungs- und Fixiervorrichtung positioniert und fixiert werden; und dass diese zusätzlichen Aufbaukomponenten mit den vorher gefügten Aufbaukomponente zusammengefügt werden.

6. Verfahren nach einem der vorangegangenen Ansprüche, wobei die Positionierungs- und Fixiervorrichtung dazu gebracht wird, Mittel zum Betätigen von Medien zu der Aufnahmevorrichtung zu umfassen, so dass diese fortlaufend mit solchen Medien beliefert werden.

7. Verfahren nach einem der vorangegangenen Ansprüche, wobei die weitere Aufbaukomponente (11) in der Positionierungs- und Fixiervorrichtung (5) vor der ersten Aufnahmevorrichtung (17) positionsgemäß fixiert wird.

8. Computerprogramm, das Instruktionen für ein Programmmodul mit einer Vielzahl von Prozessoren zum Betreiben einer Anzahl von Manipulatoren enthält, um ein Verfahren nach einem der Ansprüche 1 bis 7 auszuführen.

9. Computerprogramm nach Anspruch 8, das mindestens teilweise durch Vermittlung eines Netzes, wie Internet bereitgestellt wird.

10. Computer-lesbares Medium, das ein Computerprogramm mit Instruktionen zum Betreiben einer Anzahl von Prozessoren enthält, um ein Verfahren nach einem der Ansprüche 1 bis 7 auszuführen.

## Revendications

1. Sur une chaîne de montage comportant au moins un robot industriel, procédé d'assemblage d'une carrosserie de véhicule ou au moins d'une partie de celle-ci, les éléments constitutifs de la carrosserie de véhicule étant, pour la constitution de la carrosserie de véhicule ou de sa partie, amenés dans des positions prédéterminées les unes par rapport aux autres où elles sont assemblées les unes avec les autres, **caractérisé en ce qu'**un premier composant de carrosserie est placé, positionné et bridé dans un premier dispositif de retenue (17, 18, 19) ; **en ce que** le premier dispositif de retenue portant le premier composant de carrosserie est acheminé par un premier robot industriel (13) vers un montage de positionnement et de bridage fixe (5, 6, 7, respectivement) et positionné et bridé par rapport à celui-ci ; **en ce qu'**un autre composant de carrosserie (11) est acheminé vers le montage de positionnement et de bridage et positionné et bridé par rapport à celui-ci ; **en ce que** les premier et autres composants de carrosserie sont assemblés ensemble, au moins dans une proportion telle qu'après leur débridage il ne risque pas de se produire de déplacements par rapport à la position qui leur a été impartie, par un dispositif d'assemblage embarqué sur et manipulé par le premier ou éventuellement par un autre robot industriel (13), ce qui fait qu'un seul et même robot industriel (13) est utilisé à la fois pour manipuler le dispositif de retenue (17, 18, 19) et pour manipuler le dispositif d'assemblage.

2. Procédé selon la revendication 1, dans lequel le premier robot industriel (13) est désolidarisé du premier dispositif de retenue (17) une fois que celui-ci a été bridé en position par rapport au montage de positionnement et de bridage (5) pour prendre en charge et manipuler ensuite le dispositif d'assemblage.

3. Procédé selon la revendication 1 ou 2, dans lequel le premier robot industriel (13) est réaccouplé au premier dispositif de retenue (17), après l'assemblage des composants de carrosserie ensemble, pour ramener le dispositif de retenue dans sa position de départ (14) dans laquelle un composant est à nouveau positionné et bridé par rapport au dispositif de retenue.

4. Procédé selon une quelconque des revendications 1-3 dans lequel, après l'assemblage des composants de carrosserie ensemble, ceux-ci sont déplacés du montage de positionnement et de bridage (5) pour un complément d'assemblage.

5. Procédé selon une quelconque des revendications qui précèdent, dans lequel, après l'assemblage des composants de carrosserie ensemble et l'opération d'assemblage complémentaire éventuelle, ceux-ci sont acheminés vers un deuxième montage de positionnement et de bridage (6, 7, respectivement) et positionnés et bridés par rapport à celui-ci ; **caractérisé en ce qu'**un ou plusieurs dispositif(s) de retenue supplémentaire(s) (18, 19, respectivement) avec d'autres composants de carrosserie positionnés et bridés dans celui-ci (ceux-ci), est (sont) positionné(s) et bridé(s) par rapport au montage de positionnement et de bridage ; et **en ce que** ces composants de carrosserie supplémentaires sont assemblés avec les composants de carrosserie préalablement assemblés ensemble.

6. Procédé selon une quelconque des revendications qui précèdent, dans lequel le montage de positionnement et de bridage est agencé de manière à comprendre des moyens destinés à mettre en oeuvre des éléments auxiliaires à destination des dispositifs de retenue de manière à ce que ceux-ci soient approvisionnés en ces éléments auxiliaires de manière continue.

7. Procédé selon une quelconque des revendications qui précèdent, dans lequel l'autre composant de carrosserie (11) est bridé en position dans le montage de positionnement et de bridage (5) avant le premier dispositif de retenue (17).

8. Programme machine contenant des instructions destinées à un module de programme comprenant une pluralité de processeurs pour l'actionnement d'un certain nombre de manipulateurs pour mettre à exécution le procédé dont il est fait état dans l'une quelconque des revendications 1 à 7.

9. Programme machine selon la revendication 8 fourni au moins en partie par l'intermédiaire d'un réseau tel qu'Internet.

10. Support d'informations pouvant être lu par un ordinateur, contenant un programme machine renfermant des instructions pour actionner un certain nombre de processeurs pour mettre à exécution le procédé dont il est fait état dans l'une quelconque des revendications 1 à 7.
